Europäisches Patentamt

European Patent Office

Office européen des brevets

(11) Numéro de publication : **0 385 847 B1**

# FASCICULE DE BREVET EUROPEEN

(45) Date de publication du fascicule du brevet :
04.11.92 Bulletin 92/45

(51) Int. Cl.$^5$ : **B60R 25/02**

(21) Numéro de dépôt : **90400534.5**

(22) Date de dépôt : **26.02.90**

(54) **Dispositif antivol pour la colonne de direction d'un véhicule automobile.**

(30) Priorité : **02.03.89 FR 8902714**

(43) Date de publication de la demande :
**05.09.90 Bulletin 90/36**

(45) Mention de la délivrance du brevet :
**04.11.92 Bulletin 92/45**

(84) Etats contractants désignés :
**DE GB IT**

(56) Documents cités :
**FR-A- 2 603 824**
**US-A- 1 843 114**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Rousseau, Michel**
**20 Rue Louis Ulbach**
**F-92400 Courbevoie (FR)**

(74) Mandataire : **Durand, Yves Armand Louis et al**
**CABINET WEINSTEIN 20, Avenue de**
**Friedland**
**F-75008 Paris (FR)**

# Description

La présente invention a essentiellement pour objet un dispositif antivol pour la colonne de direction d'un véhicule automobile par exemple.

On connaît déjà d'après le document US-A-1 843 114, un dispositif antivol comprenant un pêne actionnable par un mécanisme de serrure pour permettre le blocage en rotation d'un tube solidaire d'un volant de direction et monté à rotation dans un élément tubulaire fixe et une partie mobile avec galets, déplacée par glissement par le pêne pour venir au contact du tube, étant entendu que l'ensemble tube-élément tubulaire fixe constitue ce que l'on appelle une colonne de direction.

Mais un tel dispositif, outre le fait qu'il présente une structure compliquée et délicate à mettre en oeuvre ne permet pas d'obtenir un blocage fiable et positif de la colonne de direction, quelle que soit la position de blocage.

Aussi, l'invention a pour objet un dispositif antivol pour colonne de direction d'un véhicule automobile, comprenant un pêne actionnable par un mécanisme de serrure pour permettre le blocage en rotation d'un tube solidaire d'un volant de direction et monté en rotation dans un élément tubulaire fixe, et une partie mobile déplacée par glissement par le pêne pour venir au contact du tube, caractérisé en ce qu'il comprend une pièce en forme de U interposée entre ledit élément tubulaire fixe et ledit tube et en ce que la partie mobile est constituée par deux pièces en forme de coins susceptibles de s'insérer chacune entre une branche du U. et le tube logé entre les deux branches de la pièce formant le U précité.

Suivant une autre caractéristique de ce dispositif, les deux pièces mobiles formant coins comportent chacune un talon formant avec le talon de l'autre pièce une chambre dans laquelle est montée coulissante la tête du pêne.

Suivant encore une autre caractéristique de l'invention, au moins un ressort est logé dans la chambre précitée et est interposé entre la tête du pêne et une extrémité de la chambre.

On précisera encore ici que les deux pièces mobiles formant coins sont montées à glissement sur les deux branches parallèles du U.

Le pêne précité coulisse dans une pièce de guidage montée dans un corps fixé par soudage par exemple sur l'élément tubulaire fixe.

On comprend donc déjà de ce qui précède, que, grâce aux pièces mobiles formant coins, la colonne de direction pourra être bloquée en rotation suivant des positions angulaires quelconques et multiples.

Mais d'autres avantages et caractéristiques de l'invention apparaîtront mieux dans la description détaillée qui suit et se réfère aux dessins annexés, donnés uniquement à titre d'exemple, et dans lesquels :

La figure 1 est une vue en coupe transversale de la colonne de direction d'un véhicule, cette coupe passant par l'axe du pêne qui se trouve en position inactive, c'est-à-dire de déblocage de la colonne; et

La figure 2 est une vue identique à la figure 1 mais montrant le pêne en position active, c'est-à-dire permettant le blocage en rotation de la colonne de direction.

Suivant l'exemple de réalisation représenté sur les figures, un dispositif antivol conforme aux principes de l'invention comprend essentiellement une pièce en forme de U 1 interposée entre un élément tubulaire fixe 2 et un tube 3 relié à un volant de direction (non représenté), tandis que deux pièces mobiles formant coins 4 peuvent être actionnées par un pêne 5 lui-même actionnable par un mécanisme de serrure classique et non représenté, de sorte que les pièces 4 peuvent s'insérer chacune par leurs extrémités 14 formant coins entre une branche 6 du U et le tube 3 logé entre les deux branches de la pièce 1.

L'élément tubulaire fixe 2 et le tube 3 constituent généralement une colonne de direction de véhicule.

Le pêne 5, comme connu en soi, coulisse dans une pièce de guidage 7 montée dans un corps 8 fixé par soudage, comme on le voit en 9, ou bien par vissage ou tout autre moyen sur l'élément tubulaire fixe 2.

Revenant à l'invention, les deux pièces mobiles formant coins 4 comportent chacune un talon 10 formant avec le talon de l'autre pièce une chambre 11 dans laquelle est montée coulissante une tête 12 portée par l'extrémité du pêne 5.

On a montré en 13 deux ressorts logés dans la chambre 11 et prenant appui entre la tête 12 du pêne 5 et une extrémité de ladite chambre 11.

L'extrémité 14 en forme de coin de chaque pièce mobile 4 se déplace par glissement, et par actionnement du pêne 5, entre les branches parallèles 6 du U constitué par la pièce 1, comme on le voit bien sur les figures.

Mais, pour une meilleure compréhension de l'invention, on expliquera ci-après le fonctionnement du dispositif qui vient d'être décrit.

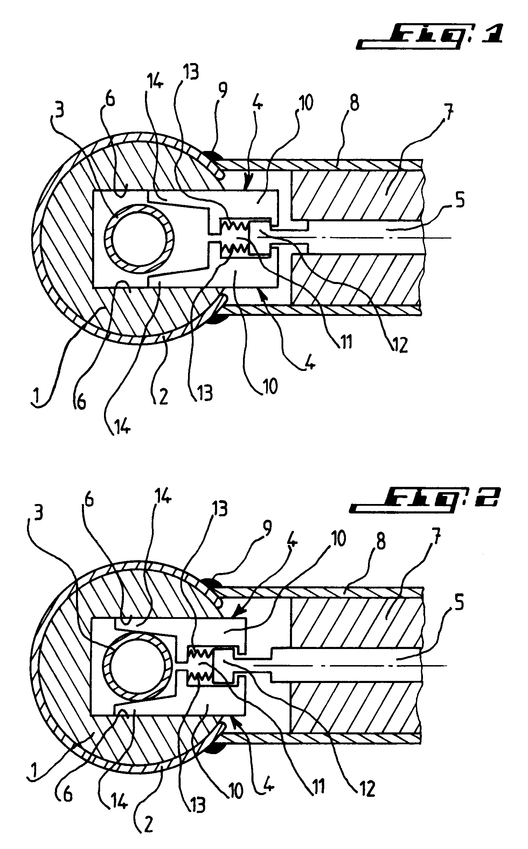

En position déverrouillée, comme on le voit sur la figure 1, le pêne 5 se trouve en position rétractée dans la pièce de guidage 7, de sorte que les deux extrémités en forme de coins 14 des pièces 4 ne sont pas en contact avec le tube 3 qui peut par conséquent tourner librement.

En position verrouillée, c'est-à-dire en position de blocage du tube 3, comme on le voit bien sur la figure 2, le pêne 5 est complètement sorti de la pièce de guidage 7, et la tête 12, par l'intermédiaire des ressorts 13 pousse les coins 14 en position d'insertion et de coincement entre les branches parallèles 6 de la pièce en forme d'étrier 1 et la paroi externe du tube 3, le coincement s'effectuant sensiblement suivant le diamètre du tube 3.

Dès lors, lorsqu'un couple, par l'intermédiaire du volant de direction (non représenté) est appliqué sur le tube 3, l'un des coins vient s'engager par coincement entre ledit tube et la pièce 1. C'est dire qu'il se produit un blocage immédiat. Lorsqu'un couple inverse est appliqué, le coin qui se trouvait en position de coincement est dégagé et l'autre coin vient en position de coincement.

Autrement dit, on obtient un blocage immédiat dans les deux sens de rotation en raison du mouvement relatif des deux pièces mobiles 4.

La longueur des deux extrémités en forme de coins 14 des pièces relativement mobiles 4 est évidemment fonction du couple appliqué au tube 3.

On a donc réalisé suivant l'invention un dispositif antivol pour colonne de direction d'un véhicule automobile qui peut procurer des positions de blocage multiples et quelconques, qui est d'un encombrement équivalent à celui des dispositifs connus, et qui permet de conserver tous les mécanismes annexes de serrure et autres des dispositifs antivol actuels.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1- Dispositif antivol pour colonne de direction d'un véhicule automobile, comprenant un pêne (5) actionnable par un mécanisme de serrure pour permettre le blocage en rotation d'un tube (3) solidaire d'un volant de direction et monté en rotation dans un élément ' tubulaire fixe (2), et une partie mobile déplacée par glissement par le pêne (5) pour venir au contact du tube (3), caractérisé en ce qu'il comprend une pièce (1) en forme de U interposée entre ledit élément tubulaire fixe (2) et ledit tube (3) et en ce que la partie mobile est constituée par deux pièces (4) en forme de coins susceptibles de s'insérer chacune entre une branche du U et le tube (3) logé entre les deux branches de la pièce (1) formant le U précité.

2- Dispositif selon la revendication 1, caractérisé en ce que les deux pièces en forme de coins (4) comportent chacune un talon (10) formant avec le talon de l'autre pièce une chambre (11) dans laquelle est montée coulissante la tête (12) du pêne (5).

3- Dispositif selon la revendication 2, caractérisé par au moins un ressort (13) logé dans la chambre précitée (11) et interposé entre la tête (12) du pêne (5) et une extrémité de la chambre (11).

4- Dispositif selon l'une des revendications 1 à 3, caractérisé en ce que les deux pièces en forme de coins (4) sont montées à glissement sur les deux branches parallèles (6) du U.

5- Dispositif selon l'une des revendications 1 à 4, caractérisé en ce que le pêne précité (5) coulisse dans une pièce de guidage (7) montée dans un corps (8) fixé sur l'élément tubulaire (2).

## Patentansprüche

1. Diebsicherungsvorrichtung für die Lenksäule eines Kraftfahrzeugs, mit einem durch einen Schlossmechanismus betätigbaren Riegel, um die Hemmung gegen Drehung eines mit einem Lenkrad fest verbundenen und drehbar in einem ortsfesten rohrförmigen Element angeordneten Rohres (3) zu gestatten und einem gleitend durch den Riegel (5) bewegbaren Teil, um mit dem Rohr (3) in Berührung zu kommen, dadurch gekennzeichnet, dass sie ein zwischen dem besagten ortsfesten rohrförmigen Element (2) und dem besagten Rohr (3) gefügtes U-förmiges Stück (1) aufweist und dass der bewegliche Teil durch zwei jeweils zwischen einem Schenkel des U's und dem zwischen den beiden Schenkeln des das vorgenannte U bildenden Stückes (1) aufgenommenen Rohr (3) einfügbare keilförmige Stücke (4) gebildet ist.

2. Vorrichtung nach Anspruch 1, dadurch gekennzeichnet, dass die beiden keilförmigen Stücke (4) jeweils einen Absatz (10) aufweisen, der zusammen mit dem Absatz des anderen Stücks eine Kammer (11) in welche der Kopf (12) des Riegels (5) gleitbar angeordnet ist, bildet.

3. Vorrichtung nach Anspruch 2, gekennzeichnet durch eine in der vorgenannten Kammer (11) aufgenommene und zwischen dem Kopf (12) des Riegels (5) und einem Ende der Kammer (11) eingefügte Feder (13).

4. Vorrichtung nach einem der Ansprüche 1 bis 3, dadurch gekennzeichnet, dass die beiden keilförmigen Stücke (4) gleitbar an beiden parallelen Schenkeln (6) des U's angeordnet sind.

5. Vorrichtung nach einem der Ansprüche 1 bis 4, dadurch gekennzeichnet, dass der vorgenannte Riegel (5) in einem, in einem an dem rohrförmigen Element (2) befestigten Körper (8) angeordneten Führungsstück (7) gleitet.

## Claims

1. Anti-theft device for the steering column of an automotive vehicle, comprising a bolt (5) operable by a lock mechanism to allow the blocking against rotation of a tube (3) made fast to a steering wheel and rotatably mounted in a stationary tubular element (2) and a movable portion displaced through sliding by the bolt (5) to come in contact with the tube (3), characterized in that it comprises a U-shaped part (1) interposed between the said stationary tubular element (2) and the said tube (3) and in that the movable portion is constituted by two wedge-shaped parts (4) adapted to be inserted each one between one leg of the U and the tube (3) accommodated between both legs of the part (1) forming the aforesaid U.

2. Device according to claim 1, characterized in that both wedge-shaped parts (4) each one comprise a heel (10) forming together with a heel of the other part a chamber (11) in which is slidably mounted the head (12) of the bolt (5).

3. Device according to claim 2, characterized by at least one spring (13) housed in the aforesaid chamber (11) and interposed between the head (12) of the bolt (5) and one end of the chamber (11).

4. Device according to one of claims 1 to 3, characterized in that both wedge-shaped parts (4) are slidably mounted onto both parallel legs (6) of the U.

5. Device according to one of claims 1 to 4, characterized in that the aforesaid bolt (5) is sliding in a guide part (7) mounted in a body (8) fastened onto the tubular element (2).

Fig. 1

Fig. 2